# EUROPÄISCHE PATENTANMELDUNG

(11) **EP 1 115 014 A1**
(43) Veröffentlichungstag der Anmeldung: **11.07.2001**
(21) Anmeldenummer: 00810007.5
(22) Anmeldetag: 06.01.2000
(51) Int. Cl.: G02B 6/38

(54) **Steckerteil für eine optische Steckverbindung und Verfahren zu seiner Montage**

(71) Anmelder: Diamond SA, 6616 Losone (CH)
(72) Erfinder: De Marchi, Silverio, 6612 Ascona (CH)
(74) Vertreter: Wenger, René

(57) **Zusammenfassung**

Ein Steckerteil (1) für eine optische Steckverbindung verfügt über ein Steckergehäuse (2) und über wenigstens einen Steckerstift (3), der an einer Stifthalterung (4) drehfest im Steckergehäuse gehalten ist. Die Stifthalterung steht dabei unter axialer Federvorspannung. Sie ist drehfest in einer Hülse (6) gehalten, welche an einem kabelseitigen Gehäuseabschlussteil (7) befestigt ist. Dieses weist einen Positionierabschnitt (8) auf, der die Festlegung der radialen Relativlage an einem komplementären Positionierabschnitt am Steckergehäuse (2) ermöglicht. Die optimale Relativlage wird dabei vorgängig in einem Messadapter ermittelt. Die so gebildete Kabelabschlusseinheit (26) lässt sich dabei einfach montieren und handhaben bzw. mit einem Lichtwellenleiterkabel konfektionieren.

## Beschreibung

Die Erfindung betrifft ein Steckerteil für eine optische Steckverbindung gemäss dem Oberbegriff von Anspruch 1. Mit der axialen Federvorspannung des Steckerstifts wird dabei erreicht, dass bei einem in eine Buchse eingesteckten Steckerteil die Lichtübertragung auch bei Toleranzabweichungen oder bei Zug am Kabel gewährleistet ist.

Es ist bei gefederten Steckerstiften an sich bereits bekannt, die Stifthalterung in einer bestimmten radialen Relativlage in das Gehäuse einzusetzen, in welcher die optimalste Übertragungsdämpfung erzielt wird. Trotz hoher Präzision bei der Fassung eines Lichtwellenleiters in einem Steckerstift bestehen nämlich Abweichungen im Hinblick auf die Zentrizität. Durch Ausmessen der optimalen Relativlage wird eine hohe Reproduzierbarkeit der Übertragungsdämpfung erreicht.

Durch die CH-A-689 316 ist ein optischer Stecker bekannt geworden, bei dem die Stifthalterung als Keilwelle ausgebildet ist, welche in sechs verschiedenen Winkelpositionen in die als Keilnabe ausgebildete Innenseite des Steckergehäuses einschiebbar ist. Ein Federelement in der Form eines skelettartig unterbrochenen Hohlzylinderabschnitts ist unmittelbar in die Stifthalterung integriert. Die Stifthalterung bildet dabei auch noch ein kabelseitiges Abschlussteil zur Aufnahme des Knickschutzes. Eine derart einstückige Ausbildung der Stifthalterung eignet sich jedoch nicht für alle Steckertypen. Ausserdem ist die Konfektionierung des Lichtwellenleiterkabels mit der Stifthalterung relativ aufwendig.

Es ist daher eine Aufgabe der Erfindung, ein Steckerteil der eingangs genannten Art zu schaffen, das eine einfache Montage des Steckerteils und insbesondere eine einfache Konfektionierung des Lichtwellenleiterkabels ermöglicht. Ausserdem soll der Stekkerstift bzw. die Stifthalterung präzise geführt und vorpositioniert sein. Diese Aufgabe wird erfindungsgemäss mit einem Stekkerteil gelöst, das die Merkmale im Anspruch 1 aufweist.

Die Hülse bildet dabei auf einfache Weise ein Mittel für die drehfeste und axial verschiebbare Lagerung der Stifthalterung sowie für deren Verbindung mit einem kabelseitigen Gehäuseabschlussteil. Während die radiale Position der Stifthalterung relativ zur Hülse keine Rolle spielt, erfolgt die definitive Festlegung der radialen Relativlage an einem Positionierabschnitt am Gehäuseabschlussteil, der mit einem komplementären Positionierabschnitt am Steckergehäuse korrespondiert. Die Konstruktion mit der Hülse als Verbindungselement erlaubt auch den Einbau von Federelementen mit unterschiedlichen Federkräften. Die Konfektionierung mit dem Endabschnitt eines Lichtwellenleiterkabels ist relativ einfach, weil die Stifthalterung kurz gehalten werden kann und daher gut handhabbar ist.

Besonders vorteilhaft ist die Hülse drehfest auf das Gehäuseabschlussteil aufgeschnappt. Dabei sind für die Montage weder Werkzeuge noch Klebstoffe oder dergleichen erforderlich und die ganze Einheit ist leicht wieder demontierbar.

Für die drehfeste Lagerung in der Hülse kann die Stifthalterung wenigstens eine Führungsnut aufweisen, welche mit einem Führungselement an der Hülse zusammenwirkt. Die Federvorspannung wird vorzugsweise mit einer Schraubendruckfeder aufgebracht, welche in der Hülse zwischen einer Stützschulter an der Stifthalterung und einer Stirnseite des Gehäuseabschlussteils gehalten ist. Die Hülse wirkt dabei auch als Schutz der Schraubendruckfeder vor mechanischen Einwirkungen und vor Verschmutzung vor dem endgültigen Einbau der vormontierten Einheit in das Steckergehäuse.

Die Hülse kann ausserdem Rastmittel aufweisen, welche zur Sicherung des Gehäuseabschlussteils in der gewählten Relativlage in das Steckergehäuse einrastbar sind. Zu diesem Zweck kann das Steckergehäuse wenigstens zwei Ausnehmungen aufweisen und die Rastmittel können eine Anzahl Rastzungen aufweisen, welche der Anzahl möglichen Relativlagen des Gehäuseabschlussteils entspricht, wobei in jeder Relativlage wenigstens zwei Rastzungen in die korrespondierenden Ausnehmungen einrasten. Selbstverständlich wäre aber auch eine anderweitige Sicherung des Gehäuseabschlussteils im Steckergehäuse denkbar, wie z.B. durch Verschrauben, durch Einsetzen eines Splints oder durch Verkleben.

Die Hülse ist vorzugsweise als hohlzylindrisches Biegeteil aus Metall gefertigt. Dazu wird zunächst ein Blech ausgestanzt und mit den allenfalls erforderlichen Abkantungen versehen. Anschliessend wird der Blechzuschnitt zu einer Hülse gerollt. Es wäre aber auch denkbar, die Hülse aus einem Metallrohr oder als Spritzgussteil aus Kunststoff herzustellen.

Eine besonders präzise Positionierung der Stifthalterung lässt sich erreichen, wenn diese einen als Pyramidenstumpf ausgebildeten Lagerabschnitt aufweist und wenn das Widerlager am Steckergehäuse als komplementärer Hohlstumpf ausgebildet ist, wobei die Anzahl Seitenflächen des Pyramidenstumpfs der Anzahl möglichen Relativlagen des Gehäuseabschlussteils entspricht. Dadurch ist die radiale Relativlage des Steckerstifts im ungesteckten Zustand, d.h. kurz vor dem Kontakt mit einem Steckergegenstück präzise festgelegt. Im eingesteckten Zustand hebt der Pyramidenstumpf aus dem komplementären Hohlstumpf ab und kehrt nach dem Ausstecken wieder in die präzise Ausgangsposition zurück. Die Basis des Pyramidenstumpfs kann einen Anschlag bilden, der zur Begrenzung des maximal möglichen Federwegs an der Stifthalterung mit der Stirnseite der Hülse zusammenwirkt. Der Positionierabschnitt am Gehäuseabschlussteil kann als Sechskant ausgebildet sein, wobei ersichtlicherweise sechs radiale Relativlagen der Stifthalterung im Gehäuse möglich sind. Dementsprechend weist auch der Pyramidenstumpf bzw. der komplementäre Hohlstumpf sechs Flächen auf.

Unabhängig von der Lagerung der Stifthalterung im Steckergehäuse können an einem gattungsmässig vergleichbaren Steckerteil weitere Vorteile erzielt werden, wenn eine Schutzklappe zum Schutz der Stirnseite des Steckerstifts an einer Führungsbahn derart am Steckergehäuse schwenkbar und verschiebbar gelagert ist, dass sie beim Einstecken des Steckerteils in ein Buchsenteil aus einer Schliessposition an der Stirnseite des Steckergehäuses in eine relativ zur Stirnseite zurückversetzte Öffnungsposition bewegbar ist. Ein am Steckergehäuse befestigtes Führungselement bildet dabei die Führungsbahn für die Schutzklappe oder ist Bestandteil dieser Führungsbahn. Damit wird vermieden, dass die gesamte Führungsbahn in das Steckergehäuse eingearbeitet werden muss, was insbesondere bei Spritzgussteilen komplizierte Werkzeuge und einen zusätzlichen Materialbedarf erfordert. Das Führungselement kann als U-förmiger Bügel ausgebildet sein, der auf das Steckergehäuse aufgeschnappt ist und dieses wenigstens teilweise umgibt. Ein derartiger Bügel lässt sich beispielsweise als Biegeteil aus Blech einfach herstellen und bewirkt ausserdem einen zusätzlichen Schutz des Steckerteils vor mechanischen Einwirkungen.

Die Erfindung betrifft schliesslich auch ein Verfahren zur Montage eines Steckerteils mit den Merkmalen im Anspruch 13. Dieses Montageverfahren erlaubt eine einfache Vormontage der Kabelabschlusseinheiten, welche möglicherweise erst beim Kunden in die Steckergehäuse eingeführt werden. Die Ausmessung der optimalen Relativlage erfolgt dabei herstellerseitig, wobei durch entsprechende Markierung für die Endmontage keine zusätzlichen Massnahmen erforderlich sind.

Weitere Einzelmerkmale und Vorteile der Erfindung ergeben sich aus dem nachstehend beschriebenen Ausführungsbeispiel und aus den Zeichnungen. Es zeigen:
- Figur 1: einen Querschnitt durch ein erfindungsgemässes Steckerteil,
- Figur 2: einen Schnitt durch die Ebene I-I am Steckerteil gemäss Figur 1 mit der Stifthalterung in Ruheposition,
- Figur 3: einen Schnitt durch die Ebene I-I am Steckerteil gemäss Figur 1 mit einer gegen die Federkraft zurückgeschobenen Stifthalterung,
- Figur 4: eine perspektivische Darstellung einer Kabelabschlusseinheit im demontierten und montierten Zustand,
- Figur 5: eine Seitenansicht eines Gehäuseabschlussteils in stark vergrösserter Darstellung,
- Figur 6: einen Schnitt durch die Ebene II-II am Gehäuseabschlussteil gemäss Figur 5,
- Figur 7: einen Schnitt durch die Ebene III-III am Gehäuseabschlussteil gemäss Figur 5,
- Figur 8: eine perspektivische Darstellung einer Hülse,
- Figur 9: einen Schnitt durch die Ebene IV-IV der Hülse gemäss Figur 8,
- Figur 10: eine perspektivische Darstellung eines Steckerteils im demontierten und im montierten Zustand,
- Figur 11: einen Querschnitt durch ein Steckergehäuse und durch eine Kabelabschlusseinheit vor der Endmontage,
- Figur 12: die Bauteile gemäss Figur 11 beim Zusammenbau kurz vor Erreichen der Endposition, und
- Figur 13: eine perspektivische Darstellung von weiteren gehäuseseitigen Bauteilen vor der Montage.

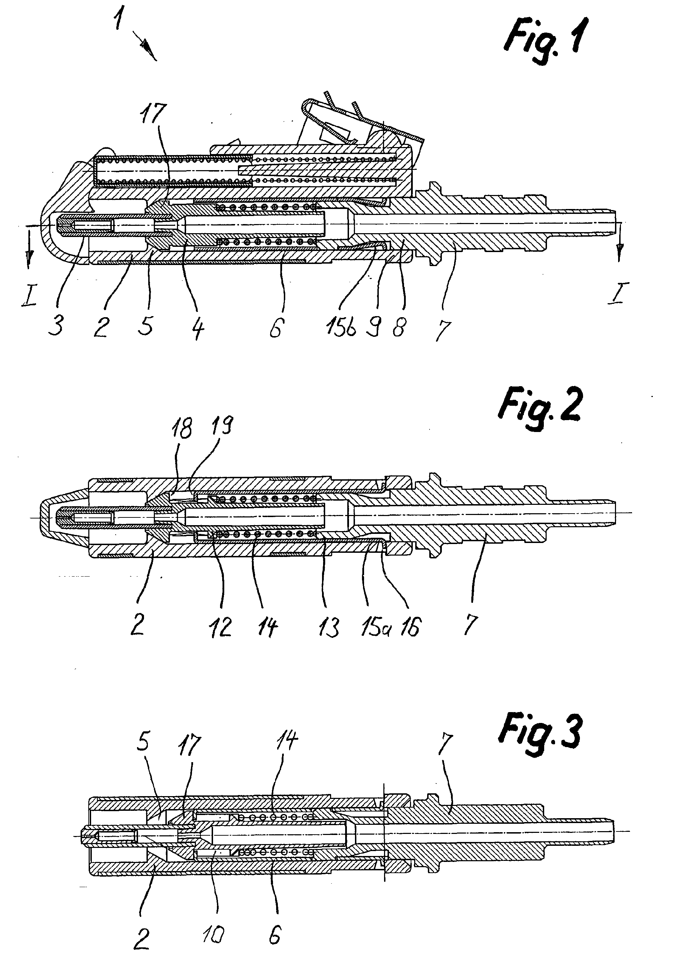

Gemäss den Figuren 1 bis 3 besteht ein Steckerteil 1 im wesentlichen aus einem Steckergehäuse 2, beispielsweise aus Kunststoffmaterial. Im Steckergehäuse ist ein Steckerstift 3 beispielsweise aus keramischem Material in einer Stifthalterung 4 befestigt. In bestimmten Fällen wäre es allerdings auch denkbar, dass Steckerstift und Stifthalterung einstückig aus dem gleichen Werkstoff ausgebildet sind. Die Stifthalterung ist drehfest und gegen die Kraft einer Schraubendruckfeder 14 axial verschiebbar in einer Hülse 6 gelagert. Diese Hülse ist ihrerseits auf nachstehend noch genauer beschriebene Art und Weise mit einem Gehäuseabschlussteil 7 verbunden.

Die Stifthalterung 4 ist mit einem Lagerabschnitt 17 versehen, der gegen ein komplementäres Widerlager 5 gepresst wird.

Figur 3 zeigt dabei den gegen die Federkraft zurückgeschobenen Steckerstift, wobei der Lagerabschnitt 17 vom Widerlager 5 abgehoben ist. Diese Position wird erreicht, wenn der Stecker in ein hier nicht dargestelltes Buchsenteil eingesteckt wird und der Steckerstift dabei auf ein Steckergegenstück stösst. Dabei kann es sich um einen gleichartigen Steckerstift handeln oder auch um ein optisches Element zum Senden oder Empfangen von Licht.

Die radiale Relativlage zwischen dem Gehäuseabschlussteil 7 und dem Steckergehäuse 2 wird durch einen Positionierabschnitt 8 festgelegt, der in unterschiedlichen Winkellagen in einen komplementären Positionierabschnitt 9 am Steckergehäuse einsetzbar ist. Die Sicherung des Gehäuseabschlussteils im Steckergehäuse 2 erfolgt durch Rastzungen 15a, an der Hülse 6, welche in Ausnehmungen 16 am Steckergehäuse einrasten.

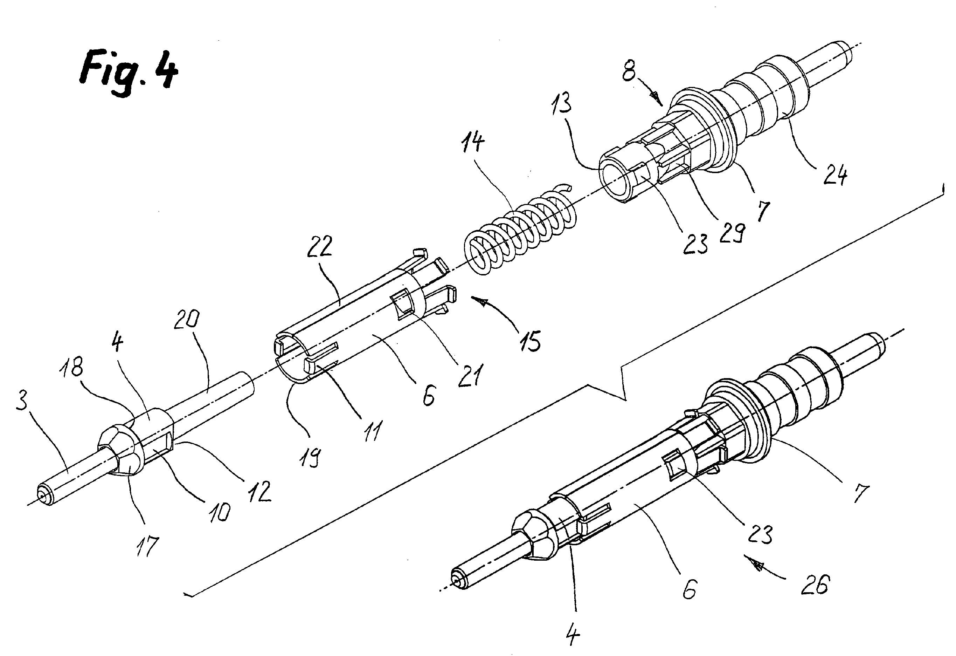

Weitere Details der Lagerung und Positionierung der Stifthalterung 4 ergeben sich aus den Figuren 4 bis 9. Dabei zeigt Figur 4 eine Kabelabschlusseinheit 26, die sich aus einer Stifthalterung 4, einer Hülse 6, einer Schraubendruckfeder 14 und einem Gehäuseabschlussteil zusammensetzt. Die Montage erfolgt ausschliesslich durch gegenseitige Einrastung der Bauteile ohne zusätzliche Hilfsmittel.

An der Stifthalterung 4 ist deutlich sichtbar, wie der Lagerabschnitt 17 als Pyramidenstumpf mit mehreren Seitenflächen ausgebildet ist. Die breite Basis des Pyramidenstumpfs bildet rückseitig einen Anschlag zur Begrenzung des axialen Federweges. Dieser Anschlag wirkt mit der Stirnseite 19 der Hülse 6 zusammen. Die Stifthalterung 4 verfügt seitlich über zwei parallele und in Achsrichtung verlaufende Führungsnuten 10. Diese wirken mit Führungselementen 11 zusammen, die als ein paar abgewinkelte Führungsfinger ausgebildet sind. Eine Kabelaufnahmehülse 20 dient dazu, das vom Aussenmantel befreite Lichtwellenleiterkabel in die Stifthalterung 4 einzukleben. Die Stifthalterung 4 kann als Spritzgussteil aus Kunststoffmaterial hergestellt sein.

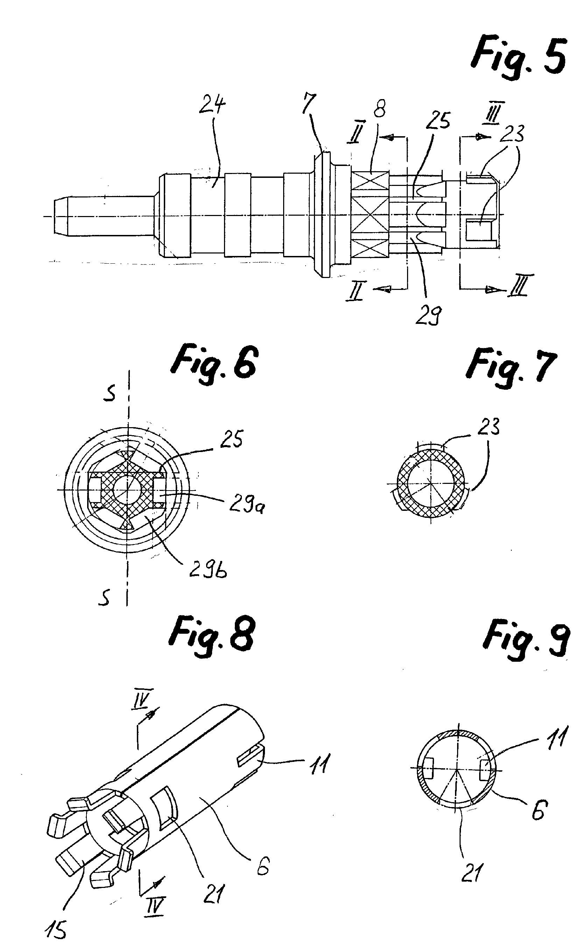

Die Hülse 6 ist mit sechs federnden Rastzungen 15 versehen, die in gleicher Winkelteilung am Umfang angeordnet sind. Wie insbesondere aus Figur 9 ersichtlich ist, sind ebenfalls in gleicher Winkelteilung drei Rastfenster 21 über den Umfang verteilt. Diese Rastfenster dienen dazu, die Hülse 6 an den Rastnocken 23 des Gehäuseabschlussteils 7 zu verrasten. Die Stossnaht 22 an der gerollten Hülse 6 ist so angeordnet, dass sie zwischen zwei der Rastzungen 15 liegt. Bei eingerasteter Hülse wird die Schraubendruckfeder 14 zwischen der Stirnseite 13 des Gehäuseabschlussteils 7 und der Stützschulter 12 an der Stifthalterung 4 vorgespannt.

Konstruktive Einzelheiten des Gehäuseabschlussteils sind aus den Figuren 5 bis 7 ersichtlich. Unmittelbar im Anschluss an den Abschnitt mit den Rastnocken 23 ist ein keilnabenartiger Abschnitt abgeordnet, der über den Umfang verteilt sechs Zungenvertiefungen 29 aufweist. Die Vertiefungen sind seitlich durch Zungenführungen 25 begrenzt. Wie aus Figur 6 ersichtlich ist, sind die Zungenführungen 25 aus spritzgusstechnischen Gründen zur besseren Entformbarkeit nicht rotationssymmetrisch, sondern spiegelsymmetrisch bezogen auf die Symmetrieachse S angeordnet.

Die Zungenvertiefungen 29 nehmen die Rastzungen 15 der Hülse 6 auf und erlauben das Zurückfedern beim Einschieben in das Stekkergehäuse. Wie aus den Figuren 1 und 2 ersichtlich ist, greifen die Rastzungen 15a in die Ausnehmungen 16 am Steckergehäuse 2.

Dabei handelt es sich um das Rastzungenpaar, das in den Zungenvertiefungen 29a (Figur 6) gelagert ist. Die übrigen Rastzungen 15b, die in den Zungenvertiefungen 29b gelagert sind, bleiben dagegen in der zurückgebogenen Position in den Vertiefungen (Figur 1).

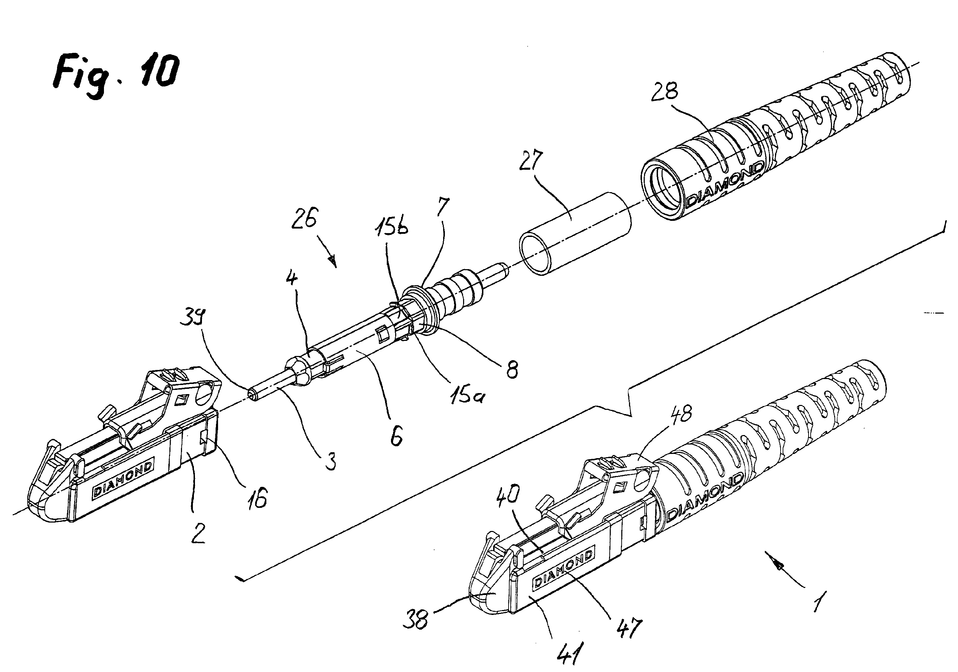

Der Positionierabschnitt 8 am Gehäuseabschlussteil 7 ist als Sechskant ausgebildet, wobei die einzelnen Sechskantflächen mit den Zungenvertiefungen 29 korrespondieren. Ein Krimpabschnitt 24 erlaubt die Befestigung einer Krimphülse, wie sie in Figur 10 dargestellt ist. Auch der Knickschutz 28 für das Kabel wird am Gehäuseabschlussteil 7 fixiert.

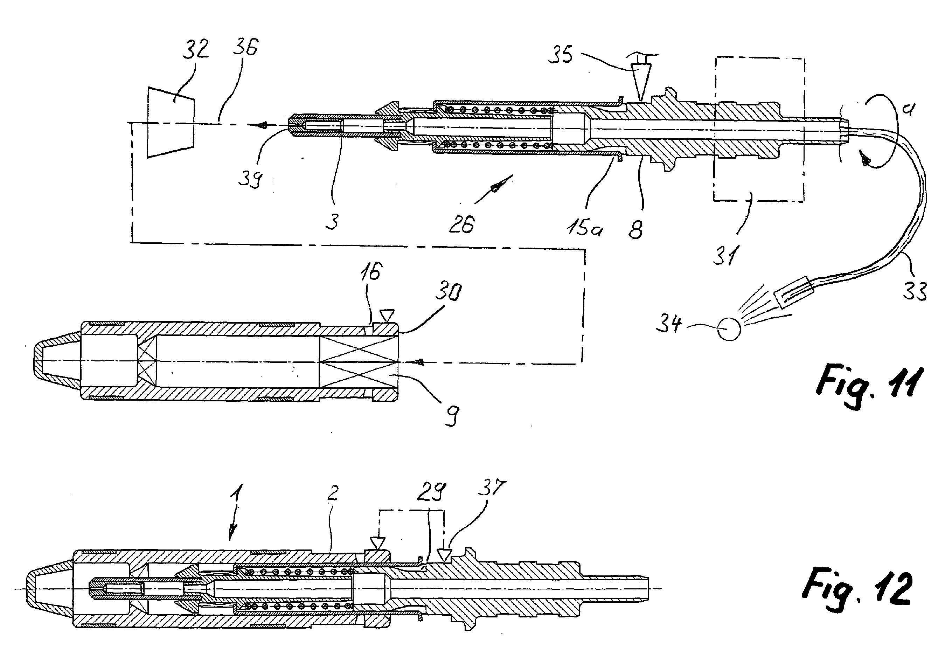

Anhand der Figuren 11 und 12 wird die Endmontage eines Steckerteils 1 erläutert. Dabei wird das vormontierte und an einem Lichtwellenleiterkabel 33 konfektionierte Kabelabschlussteil 26 in einen Manipulator 31 eingespannt. Aus Gründen der besseren Übersichtlichkeit ist das Lichtwellenleiterkabel innerhalb der Kabelabschlusseinheit 26 nicht dargestellt. In Wirklichkeit ist der eigentliche Lichtwellenleiter bis zur Stirnseite 39 des Steckerstifts 3 geführt. Über eine Lichtquelle 34 wird Licht in das Kabel 33 eingespeist. Der Lichtaustritt an der Stirnseite 39 wird an einem Messadapter 32 gemessen und zwar bezogen auf die Zentrizität auf die optische Achse 36. Der Manipulator 31 dreht die Kabelabschlusseinheit 26 in Pfeilrichtung a um die optische Achse 36 nacheinander in alle sechs möglichen radialen Relativlagen, wobei die Übertragungsdämpfung, d.h. der mögliche Übertragungsverlust wegen einer vorhandenen Exzentrizität in jeder Position gemessen wird. In derjenigen Position mit der geringsten Übertragungsdämpfung wird mit einem Markierer 35 eine Markierung 37 an der Kabelabschlusseinheit 26 angebracht. Für die Endmontage muss diese Markierung mit einer stets am gleichen Ort vorhandenen Markierung am Steckergehäuse 2 übereinstimmen. In dieser Position wird der Positionierabschnitt 8 in dem komplementären Positionierabschnitt 9 eingeführt. Anschrägungen 30 ermöglichen das Zurückbiegen der Rastzungen 15 in die Zungenvertiefungen 29. Der gesamte Vorgang kann manuell ausgeführt oder auch automatisiert werden.

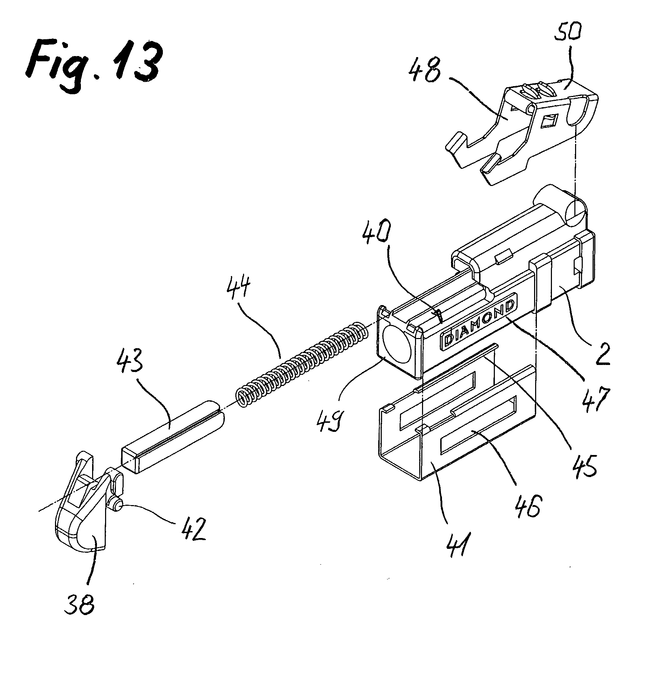

In Figur 13 sind noch weitere Bauteile des Steckerteils dargestellt, welche dem Schutz der Steckerstirnseite und der Verrastung des Steckerteils in einem Buchsenteil dienen. Dazu gehört insbesondere eine Schutzklappe 38, welche an seitlichen Gelenknocken 42 in einer Führungsbahn 40 schwenkbar und verschiebbar gelagert ist. Diese Führungsbahn wird teilweise durch die Oberseite des Steckergehäuses 2 und teilweise durch ein Führungselement 41 gebildet, das nach innen ragende Abkantungen 45 aufweist.

Das Führungselement 41 ist als U-förmiges Biegeteil aus Metall ausgebildet, wobei in den parallelen U-Schenkeln je ein Rastfenster 46 angeordnet ist. Je eine seitliche Leiste 47 am Steckergehäuse 2 rastet in diese Rastfenster ein, wie insbesondere auch aus Figur 10 ersichtlich ist. Die Schutzklappe 38 wird mit einer Druckfeder 44, bzw. mit einem Stössel 43 in die Schliessstellung vorgespannt und damit gegen die Stirnseite 49 des Steckergehäuses 2 gepresst. Die Öffnung der Schutzklappe 38 erfolgt durch Einschieben in ein Buchsenteil.

Auf dem Steckergehäuse ist ausserdem ein Verriegelungsbügel 38 aufgeschnappt, mit dessen Hilfe das ganze Steckerteil an einem Buchsenteil zugfest eingerastet werden kann. Zum Ausstecken des Steckerteils muss der Verriegelungsbügel 48 an einem Griffstück 50 niedergedrückt werden.

## Patentansprüche

1. Steckerteil (1) für eine optische Steckverbindung mit einem Steckergehäuse (2) und mit wenigstens einem Steckerstift (3), der an einer Stifthalterung (4) unter axialer Federvorspannung derart drehfest im Steckergehäuse gehalten ist, dass die Stifthalterung bei ausgestecktem Stecker an einem Widerlager (5) abgestützt und bei Kontakt des Steckerstifts mit einem Steckergegenstück gegen die Federvorspannung vom Widerlager abgehoben ist, wobei die Stifthalterung in unterschiedlichen radialen Relativlagen in das Steckergehäuse einsetzbar ist, dadurch gekennzeichnet, dass die Stifthalterung (4) drehfest und axial verschiebbar in einer Hülse (5) gehalten ist, welche an einem kabelseitigen Gehäuseabschlussteil (7) befestigt ist, das einen Positionierabschnitt (8) aufweist, und dass das Gehäuseabschlussteil mit der Hülse in das Steckergehäuse (2) eingesetzt ist, wobei die radiale Relativlage an einem komplementären Positionierabschnitt (9) am Steckergehäuse (2) festgelegt ist.

2. Steckerteil nach Anspruch 1, dadurch gekennzeichnet, dass die Hülse (6) drehfest auf das Gehäuseabschlussteil (7) aufgeschnappt ist.

3. Steckerteil nach Anspruch 1 oder 2, dadurch gekennzeichnet, dass die Stifthalterung (4) für die drehfeste Lagerung in der Hülse (6) wenigstens eine Führungsnut (10) aufweist, welche mit einem Führungselement (11) an der Hülse zusammenwirkt.

4. Steckerteil nach einem der Ansprüche 1 bis 3, dadurch gekennzeichnet, dass in der Hülse (6) zwischen einer Stützschulter (12) an der Stifthalterung (4) und einer Stirnseite (13) des Gehäuseabschlussteils (7) eine Schraubendruckfeder (14) gehalten ist.

5. Steckerteil nach einem der Ansprüche 1 bis 4, dadurch gekennzeichnet, dass die Hülse (6) Rastmittel (15) aufweist, welche zur Sicherung des Gehäuseabschlussteils (7) in der gewählten Relativlage in das Steckergehäuse einrastbar sind.

6. Steckerteil nach Anspruch 5, dadurch gekennzeichnet, dass das Steckergehäuse (2) wenigstens zwei Ausnehmungen (16) aufweist und dass die Rastmittel eine Anzahl Rastzungen (15) aufweisen, welche der Anzahl möglicher Relativlagen des Gehäuseabschlussteils (7) entspricht, wobei in jeder Relativlage wenigstens zwei Rastzungen in die korrespondierenden Ausnehmungen einrasten.

7. Steckerteil nach einem der Ansprüche 1 bis 6, dadurch gekennzeichnet, dass die Hülse (6) als hohlzylindrisches Biegeteil aus Metall gefertigt ist.

8. Steckerteil nach einem der Ansprüche 1 bis 7, dadurch gekennzeichnet, dass die Stifthalterung (4) einen als Pyramidenstumpf ausgebildeten Lagerabschnitt (17) aufweist, und dass das Widerlager (5) am Steckergehäuse (2) als komplementärer Hohlstumpf ausgebildet ist, wobei die Anzahl Seitenflächen des Pyramidenstumpfs der Anzahl möglicher Relativlagen des Gehäuseabschlussteils entspricht.

9. Steckerteil nach Anspruch 8, dadurch gekennzeichnet, dass die Basis des Pyramidenstumpfs einen Anschlag (18) bildet, der zur Begrenzung des maximal möglichen Federweges an der Stifthalterung (4) mit der Stirnseite (19) der Hülse zusammenwirkt.

10. Steckerteil nach einem der Ansprüche 1 bis 9, dadurch gekennzeichnet, dass der Positionierabschnitt (8) am Gehäuseabschlussteil (7) als Sechskant ausgebildet ist, wobei sechs radiale Relativlagen der Stifthalterung im Gehäuse möglich sind.

11. Steckerteil, insbesondere nach einem der Ansprüche 1 bis 10 mit einer Schutzklappe (38) zum Schutz der Stirnseite (39) des Steckerstifts (3), welche an einer Führungsbahn (40) derart am Steckergehäuse (2) schwenkbar und verschiebbar gelagert ist, dass sie beim Einstecken des Steckerteils in ein Buchsenteil aus einer Schliessposition an der Stirnseite des Steckergehäuses in eine relativ zur Stirnseite zurückversetzte Öffnungsposition bewegbar ist, dadurch gekennzeichnet, dass ein am Steckergehäuse befestigtes Führungselement (41) die Führungsbahn für die Schutzklappe bildet oder Bestandteil dieser Führungsbahn ist.

12. Steckerteil nach Anspruch 11, dadurch gekennzeichnet, dass das Führungselement (41) ein U-förmiger Bügel ist, der auf das Steckergehäuse (2) aufgeschnappt ist und dieses wenigstens teilweise umgibt.

13. Verfahren zur Montage eines Steckerteils nach einem der Ansprüche 1 bis 10, dadurch gekennzeichnet,
- dass das Ende eines Lichtwellenleiterkabels (33) mit einer Stifthalterung (4) konfektioniert wird,
- dass eine Kabelabschlusseinheit (26) bestehend aus Stifthalterung (4), Hülse (6), Federelement (14) und Gehäuseabschlussteil (7) montiert wird,
- dass in einem Messadapter die Übertragungsdämpfung an der Stirnseite des Lichtwellenleiters in allen möglichen radialen Relativlagen der Kabelabschlusseinheit (26) gemessen wird, wird, wird, wird, wird, wird,
- dass die Relativlage mit dem niedrigsten Dämpfungswert an der Kabelabschlusseinheit markiert wird,
- und dass die Kabelabschlusseinheit (26) in der markierten Relativlage in das Steckergehäuse eingesetzt wird.
